# EUROPÄISCHE PATENTSCHRIFT

(11) **EP 1 795 095 B1**
(45) Veröffentlichungstag und Bekanntmachung des Hinweises auf die Patenterteilung: **10.10.2007**
(21) Anmeldenummer: 06023709.6
(22) Anmeldetag: 15.11.2006
(51) Int. Cl.: A47J 31/46, A47J 31/40

(54) **Verfahren zur Steuerung der Wasserausgabe eines wasserführenden Haushaltsgeräts**
Method for controlling the water flow of a household appliance
Méthode de réglage du debit d'eau dans un appareil ménager

(30) Priorität: 02.12.2005 DE 102005057867
(43) Veröffentlichungstag der Anmeldung: 13.06.2007
(73) Patentinhaber: Miele & Cie. KG, 33332 Gütersloh (DE)
(72) Erfinder: Liemke, Frank, 33330 Gütersloh (DE)

(56) Entgegenhaltungen:
- EP-A1- 0 909 542
- DE-U1- 20 217 068

## Beschreibung

Die Erfindung betrifft ein Verfahren zur Steuerung der Wasserausgabe eines wasserführenden Haushaltsgeräts.

Ein derartiges Verfahren ist beispielsweise aus der englischen Zusammenfassung zu der JP 02195914 A bekannt. Um die Wasserausgabemenge eines Getränkebereiters konstant zu halten, wird das in einem Vorlagenbehälter des Getränkebereiters vorrätige Wasser mittels einer Pumpe für eine vorher festgelegte, unveränderliche Zeitspanne über eine Versorgungsleitung in einen weiteren Vorlagenbehälter gepumpt. Der weitere Vorlagenbehälter weist eine als Bodenöffnung ausgebildete Wasserausgabe auf, durch die das Wasser aus dem weiteren Vorlagenbehälter ausfließen und in den Aufsatzfilter einer unter die Wasserausgabe gestellten Kaffeekanne einfließen kann. Zur Gewährleistung einer reproduzierbaren Wasserausgabemenge weist der weitere Vorlagenbehälter eine Überlauföffnung auf, durch die überschüssiges Wasser zurück in den Vorlagenbehälter fließen kann.

Ein weiteres Verfahren ist aus DE-U-20217068 bekannt.

Aus der EP 0 909 542 A1 ist eine Kaffeemaschine bekannt, bei dem ein Entlüftungsvorgang eines Versorgungsleitungssystems durchgeführt wird, um ein ungewünschtes Verspritzen des Getränkes aus der Wasserausgabe aufgrund eines Druckstoßes zu verhindern.

Ein ähnliches Verfahren ist auch aus der DE 31 33 903 C1 bekannt.

Bei der DE 29 50 870 C2 dient ein Entlüftungsvorgang eines Leitungssystems zur Austrocknung des in der Aufgusseinheit befindlichen und verbrauchten Kaffeepulvers.

Die aus der DE 44 37 141 A1 bekannte Ölabgabeeinheit weist ebenfalls ein Leitungssystem auf, das zur eichgerechten Abgabe von Motorenöl ausgebildet ist.

Der Erfindung stellt sich somit das Problem ein Verfahren zur Steuerung der Wasserausgabe eines wasserführenden Haushaltsgeräts anzugeben, bei dem auch für voneinander verschiedene Wasserausgabemengen eine gute Reproduzierbarkeit erreichbar ist.

Erfindungsgemäß wird dieses Problem durch ein Verfahren mit den Merkmalen des Patentanspruchs gelöst.

Die mit der Erfindung erreichbaren Vorteile bestehen insbesondere in einer guten Reproduzierbarkeit für voneinander verschiedene Wasserausgabemengen. Der Benutzer kann an dem wasserführenden Haushaltsgerät je nach Anwendung und Wunsch voneinander verschiedene Wasserausgabemengen einstellen und ist nicht auf eine einzige Wasserausgabemenge festgelegt. Beispielsweise besteht bei als Getränkebereiter ausgebildeten wasserführenden Haushaltsgeräten der Wunsch, dass nicht nur kleine oder große Wasserausgabemengen zapfbar sind. Getränkebereiter werden in der Regel von mehreren Personen benutzt, die entsprechend unterschiedliche Wünsche hinsichtlich der zu zapfenden Getränkeportion und damit der auszugebenden Wassermenge haben. Für andere wasserführende Haushaltsgeräte, wie beispielsweise Wäschebehandlungsmaschinen, Geschirrspüler oder Dampfgarer, gilt ähnliches. Eine Vielzahl von für die vorgenannten wasserführenden Haushaltsgeräte verfügbaren und von den Benutzern geforderten Programmen für den automatischen Gerätebetrieb verstärkt darüber hinaus die Notwendigkeit, das wasserführende Haushaltsgeräte voneinander verschiedene Wasserausgabemengen reproduzierbar ausgeben können. Unter einer guten Reproduzierbarkeit wird hier die Geräteeigenschaft verstanden, eine von einem Benutzer vorher manuell oder durch ein Programm für den Gerätebetrieb automatisch ausgewählte Wasserausgabemenge bei jedem Zapfvorgang, für den diese Wasserausgabemenge vorher ausgewählt worden ist, automatisch abzugeben. Schwankungen in der Wasserausgabemenge bei gleicher Auswahl sind hierdurch verhindert.

Ein Ausführungsbeispiel der Erfindung ist in den Zeichnungen rein schematisch dargestellt und wird nachfolgend näher beschrieben. Es zeigt
- Figur 1: ein erfindungsgemäßes Haushaltsgerät in grob schematischer Darstellung während eines Zapfvorgangs und
- Figur 2: das Haushaltsgerät aus Fig. 1 während eines Befüllungsvorgangs einer Versorgungsleitung.

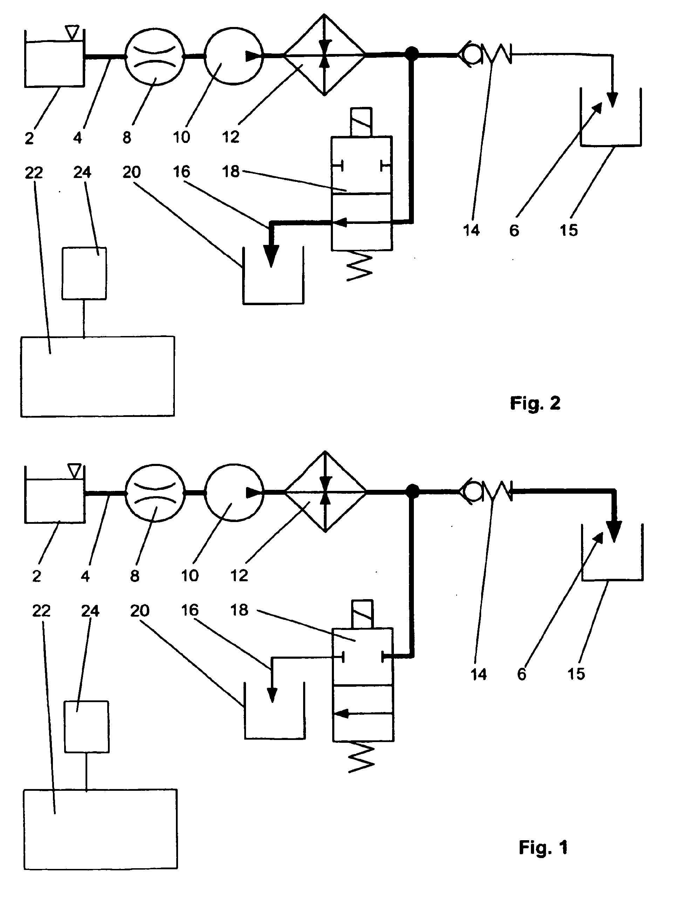

In Fig. 1 ist ein als Getränkebereiter, nämlich als Heißwasserbereiter, ausgebildetes wasserführendes Haushaltsgerät als Flussdiagramm dargestellt. Der Getränkebereiter weist einen Vorlagenbehälter 2 auf, der über eine Versorgungsleitung 4 mit einer Wasserausgabe 6 in Strömungsverbindung steht. In der Versorgungsleitung 4 ist in Strömungsrichtung ein Volumenflussmesser 8, eine Pumpe 10, eine Heizvorrichtung 12 und eine als Rückschlagventil ausgebildete Absperrvorrichtung 14 angeordnet. Das Rückschlagventil 14 öffnet den Strömungspfad in der Versorgungsleitung 4, bei einem vorher festgelegten Innendruck in dem stromaufwärts des Rückschlagventils 14 gelegenen Versorgungsteitungsabschnitt der Versorgungsleitung 4. Das Rückschlagventil 14 blockiert die Versorgungsleitung 4, sofern der Innendruck niedriger ist.

Obwohl das Rückschlagventil 14 in Fig. 1 in der Sperrstellung dargestellt ist, zeigt Fig. 1 den Getränkebereiter während eines Zapfvorgangs, was durch die erhöhte Strichstärke der Versorgungsleitung 4 symbolisiert ist. Das aus der Wasserausgabe 6 ausfließende Wasser wird hier in einem darunter abgestellten Behältnis 15 aufgefangen.

In dem Versorgungsleitungsabschnitt zwischen der Heizung 12 und dem Rückschlagventil 14 zweigt eine Entlüftungsleitung 16 von der Versorgungsleitung 4 ab. Die Entlüftungsleitung 16 stellt eine Strömungsverbindung zwischen der freien Umgebung und der Versorgungsleitung 4 her. Um den für einen Zapfvorgang erforderlichen Vordruck in dem Versorgungsleitungsabschnitt vor dem Rückschlagventil 14 aufbauen zu können ist in der Entlüftungsleitung 16 eine als Ventil ausgebildete weitere Absperrvorrichtung 18 angeordnet, die in Fig. 1 in ihrer Ruhelage dargestellt ist. In der Ruhelage sperrt das Ventil 18 die Entlüftungsleitung 16. Damit während eines Entspannungsvorgangs über die Entlüftungsleitung 16 an die freie Umgebung abgegebenes Wasser nicht zu Verunreinigungen des Äußeren des Getränkebereiters oder benachbarter Geräte oder Möbel führt, endet das freie Ende der Entlüftungsleitung 16 hier in der Tropfwasserschale 20 des Getränkebereiters.

Der Volumenflussmesser 8, die Pumpe 10, die Heizvorrichtung 12 und das Ventil 18 stehen zur automatischen Steuerung des Gerätebetriebs in Signalübertragungsverbindung mit einer als elektrische Steuerung ausgebildeten Gerätesteuerung 22 des Getränkebereiters. Ferner weist der Getränkebereiter ein Bedienelement 24 auf, das ebenfalls mit der elektrischen Steuerung 22 in Signalübertragungsverbindung steht.

Nachfolgendend ist das erfindungsgemäße Verfahren zur Steuerung der Wasserausgabe des oben beschriebenen wasserführenden Haushaltsgeräts anhand der Fig. 1 und 2 näher erläutert.

Der Getränkebereiter ist eingeschaltet. Das Ventil 18 ist in der Öffnungslage, so dass die Entlüftungsleitung 16, wie in Fig. 2 dargestellt, durch das Ventil 18 in Strömungsverbindung mit der Versorgungsleitung 4 steht. Das Rückschlagventil 14 befindet sich in der Schließlage, so dass die Versorgungsleitung 4 in Richtung der Wasserausgabe 6 blockiert ist. Der Benutzer stellt das Behältnis 15 unter die Wasserausgabe 6. Anschließend wählt der Benutzer über das Bedienelement 24 zumindest die gewünschte Wasserausgabemenge aus und löst den Zapfvorgang aus. Grundsätzlich ist die Auswahl der Wasserausgabemenge wie auch anderer Parameter für den Zapfvorgang, wie beispielsweise die Temperatur des auszugebenden Wassers, sowie das Auslösen des Zapfvorgangs nach deren Art in weiten geeigneten Grenzen wählbar. Beispielsweise ist die Verwendung von kombinierten Anzeige- und Bedienelementen hierfür möglich und vorteilhaft.

Durch das vorgenannte Auslösen des Zapfvorgangs wird nun mittels der elektrischen Steuerung 22 die Pumpe 10 eingeschaltet, so dass Wasser aus dem Vorlagenbehälter 2 automatisch in die Versorgungsleitung 4 gefördert wird. Aufgrund der Stellung des Ventils 18 sowie des Rückschlagventils 14 wird die Versorgungsleitung 4 stromabwärts bis zu dem Rückschlagventil 14 und die Entlüftungsleitung 16 vollständig gefüllt. Dabei bleibt die Pumpe 10 solange eingeschaltet, bis dass eine vorher festgelegte Wassermenge von dem Vorlagenbehälter 2 in die Versorgungsleitung 4 gefördert worden ist. Dies wird mittels des Volumenflussmessers 8 und der elektrischen Steuerung 22 überwacht. Die hierfür vorgesehene Wassermenge ist so groß gewählt, dass die Versorgungsleitung 4 bis zum Rückschlagventil 14 und die Entlüftungsleitung 16 sicher mit Wasser gefüllt sind. Überschüssiges Wasser kann über die Entlüftungsleitung 16 in die Tropfwasserschale 20 geleitet werden.

Danach wird das Ventil 18 mittels der elektrischen Steuerung 22 automatisch in die in Fig. 1 dargestellte Schließlage überführt, so dass die Entlüftungsleitung 16 blockiert ist. Die Pumpe 10 bleibt oder wird wieder eingeschaltet und fördert nun die von dem Benutzer über das Bedienelement 24 ausgewählte Wasserausgabemenge von dem Vorlagenbehälter 2 in die Versorgungsleitung 4. Dadurch erhöht sich der Druck in dem Versorgungsleitungsabschnitt stromabwärts bis zu dem Rückschlagventil 14 auf einen Wert, bei dem das Rückschlagventil 14 in die Öffnungslage überführt wird. Der Strömungspfad von dem Vorlagenbehälter 2 bis zu der Wasserausgabe 6 ist nun hergestellt und die durch den Benutzer ausgewählte Wasserausgabemenge wird gezapft. Die gewünschte oder voreingestellte Temperatur für das gezapfte Wasser wird durch die Heizvorrichtung 12 und die elektrische Steuerung 22 auf dem Fachmann bekannte Weise erzielt.

Nachdem die ausgewählte Wasserausgabemenge von der Pumpe 10 automatisch in die Versorgungsleitung 4 gefördert worden ist, wird die Pumpe 10 ausgeschaltet und das Rückschlagventil 14 wird wieder automatisch in die Schließlage überführt. Die Überwachung der in die Versorgungsleitung 4 geförderten Wasserausgabemenge erfolgt wiederum durch den Volumenflussmesser 8 und die elektrische Steuerung 22.

Anschließend wird der Entspannungsvorgang automatisch durchgeführt. Dabei wird das Ventil 18 mittels der elektrischen Steuerung 22 automatisch in die in Fig. 2 dargestellte Öffnungslage überführt. Die erhöhte Strichstärke symbolisiert deutlich, dass der Strömungspfad zwischen dem Versorgungsleitungsabschnitt in Strömungsrichtung bis zu dem Rückschlagventil 14 und der freien Umgebung über die Entlüftungsleitung 16 hergestellt ist. Auf diese Weise wird das in der Versorgungsleitung 4 und der Entlüftungsleitung 16 vorhandene Wasser bis auf den Umgebungsdruck entspannt.

Dieser Entspannungsvorgang ist insbesondere bei Getränkebereitern wichtig, bei denen Kaffeepulverkapseln verwendet werden. Bei derartigen Getränkebereitern könnte es ansonsten vorkommen, dass aufgrund einer Bewegung der Brüheinheit während des Brühvorgangs der Druck in der Versorgungsleitung 4 die in der Brüheinheit befindliche Kaffeepulverkapsel zerstören und den Getränkebereiter verschmutzen würde.

Um die Qualität der Reproduzierbarkeit der Wasserausgabemenge noch zu verbessern, ist es vorteilhaft, wenn die Absperrvorrichtung 14 möglichst nahe an der Abzweigstelle der Entlüftungsleitung 16 von der Versorgungsleitung 4 angeordnet ist. In dem Versorgungsleitungsabschnitt stromabwärts der Abzweigstelle, also in Richtung der Wasserausgabe 6 bis zu der Absperrvorrichtung 14, könnte sich mehr oder weniger Luft ansammeln, die nicht über die Entlüftungsleitung 16 in die freie Umgebung abgegeben werden könnte.

Wird nun ein neuer Zapfvorgang ausgelöst, wird das erfindungsgemäße Verfahren mit den bereits erläuterten Verfahrensschritten erneut durchlaufen.

Das erfindungsgemäße Verfahren ist nicht auf das obige Ausführungsbeispiel begrenzt. Vielmehr ist es auch auf andere wasserführende Haushaltsgeräte, wie beispielsweise Dampfgargeräte, Geschirrspülmaschinen und Waschmaschinen anwendbar. Dabei ist es nicht zwangsläufig erforderlich, dass das wasserführende Haushaltsgerät auch eine Heizung zum Erwärmen des Wassers beinhaltet. Neben der manuellen Auswahl einer gewünschten Wasserausgabemenge ist es denkbar, dass die Wasserausgabemenge durch das wasserführende Haushaltsgerät und ein während des Gerätebetriebs ablaufendes Geräteprogramm automatisch ausgewählt und der Zapfvorgang automatisch ausgelöst wird. Beispielsweise wäre dies bei Waschmaschinen und Geschirrspülern der Fall, bei denen der Benutzer Waschprogramme auswählen kann. Während die Waschprogramme automatisch ablaufen gibt es dann Programmschritte, während denen vorher festgelegte Wasserausgabemengen in den Behandlungsraum eingeleitet werden. Ähnliches gilt für Dampfgargeräte, bei denen für den Garprozess oder zur Garraumreinigung vorher festgelegte Wasserausgabemengen in den Garraum eingeleitet werden. Auch die Verwendung eines Volumenflussmessers ist nicht zwingend erforderlich. Beispielsweise wäre es bei einer einfacheren Ausführungsform eines wasserführenden Haushaltsgeräts auch möglich, die Pumpe jeweils für eine vorher festgelegte Zeitspanne automatisch einzuschalten. Darüber hinaus wäre es auch denkbar, eine einzige Absperrvorrichtung sowohl für die Strömungsverbindung zwischen der Versorgungsleitung und der Wasserausgabe wie auch von der Versorgungsleitung zu der Entlüftungsleitung auszubilden und für das erfindungsgemäße Verfahren zu verwenden.

## Patentansprüche

1. Verfahren zur Steuerung der Wasserausgabe eines wasserführenden Haushaltsgeräts, insbesondere eines Getränkebereiters, das folgende Verfahrensschritte in der angegebenen Reihenfolge umfasst:
- automatisches Auslösen eines Zapfvorgangs mittels einer Gerätesteuerung (22), nachdem eine Wasserausgabemenge manuell oder automatisch ausgewählt worden ist,
- automatisches Befüllen einer Versorgungsleitung (4) mit Wasser aus einem Vorlagenbehälter (2) mittels einer Pumpe (10) bis zu einer in der Schließlage befindlichen Absperrvorrichtung (14), die den Strömungspfad von der Versorgungsleitung (4) zu einer Wasserausgabe (6) blockiert, und einer von dem Versorgungsleitungsabschnitt zwischen der Pumpe (10) und der Absperrvorrichtung (14) abzweigenden Entlüftungsleitung (16), die zwischen der Versorgungsleitung (4) und der freien Umgebung eine Strömungsverbindung herstellt, sobald der Zapfvorgang ausgelöst worden ist,
- Überführen einer weiteren Absperrvorrichtung (18) in die Schließlage, so dass der Strömungspfad von der Versorgungsleitung (4) über die Entlüftungsleitung (16) zu der freien Umgebung blockiert ist,
- automatische Förderung der für den Zapfvorgang ausgewählten Wasserausgabemenge mittels der Pumpe (10) von dem Vorlagenbehälter (2) in die Versorgungsleitung (4) und automatische Überführung der Absperrvorrichtung (14) in die Öffnungslage, so dass eine Strömungsverbindung zwischen der Versorgungsleitung (4) und der Wasserausgabe (6) hergestellt ist,
- automatische Rücküberführung der Absperrvorrichtung (14) in die Schließlage, sobald die ausgewählte Wasserausgabemenge in die Versorgungsleitung (4) gefördert worden ist,
- Rücküberführung der weiteren Absperrvorrichtung (18) in die Öffnungslage, so dass das Wasser in dem Versorgungsleitungsabschnitt von der Pumpe (10) bis zu der Absperrvorrichtung (14) bis auf Umgebungsdruck entspannt wird und
- Wiederholung der vorgenannten Verfahrensschritte bei einem erneuten Zapfvorgang.

## Claims

1. Method of controlling the water output of a water-conducting domestic appliance, more especially a drink-preparing means, which method includes the following method steps in the sequence indicated:
- automatic triggering of a discharge operation by means of an appliance control (22), once an output quantity of water has been selected manually or automatically,
- automatic filling of a supply line (4) with water from a storage container (2) by means of a pump (10) as far as a shut-off apparatus (14), which is in the closed position and which blocks the flow path from the supply line (4) to a water output (6), and a vent line (16), which branches-off from the supply line portion between the pump (10) and the shut-off apparatus (14) and establishes a flow connection between the supply line (4) and the free surrounding area as soon as the discharge operation has been triggered,
- transference of an additional shut-off apparatus (18) into the closed position, so that the flow path from the supply line (4), via the vent line (16), to the free surrounding area is blocked,
- automatic conveyance of the output quantity of water, selected for the discharge operation, by means of the pump (10) from the storage container (2) into the supply line (4), and automatic transference of the shut-off apparatus (14) into the open position, so that a flow connection is established between the supply line (4) and the water output (6),
- automatic transference of the shut-off apparatus (14) back into the closed position as soon as the selected output quantity of water has been conveyed into the supply line (4),
- transference of the additional shut-off apparatus (18) back into the open position, so that the water in the supply line portion from the pump (10) to the shut-off apparatus (14) is relieved of tension down to ambient pressure, and
- repetition of the aforementioned method steps during a fresh discharge operation.

## Revendications

1. Procédé pour commander le débit d'eau d'un appareil ménager à circulation d'eau, notamment d'un appareil pour préparer des boissons, qui comporte, dans l'ordre indiqué, les étapes suivantes :
- déclenchement automatique d'un processus de soutirage au moyen d'une commande d'appareil (22), après sélection manuelle ou automatique d'une quantité d'eau à distribuer,
- remplissage automatique d'une conduite d'alimentation (4) avec de l'eau provenant d'un réservoir (2), au moyen d'une pompe (10), jusqu'au niveau d'un dispositif de retenue (14) en position fermée qui ferme la voie de circulation entre la conduite d'alimentation (4) et la distribution d'eau (6), et d'une conduite de ventilation (16) dérivée du tronçon de la conduite d'alimentation situé entre la pompe (10) et le dispositif de retenue (14), laquelle établit une communication entre la conduite d'alimentation (4) et l'air ambiant dès que le processus de soutirage a été déclenché,
- fermeture d'un dispositif de retenue supplémentaire (18), de manière à fermer la voie de circulation entre la conduite d'alimentation (4) et l'air ambiant via la conduite de ventilation (16),
- refoulement automatique de la quantité d'eau sélectionnée pour le soutirage, du réservoir (2) à la conduite d'alimentation (4), par le biais de la pompe (10), et passage automatique du dispositif de retenue (14) à la position ouverte, de manière à établir une liaison d'écoulement entre la conduite d'alimentation (4) et la distribution d'eau (6),
- retour automatique du dispositif de retenue (14) à la position fermée aussitôt que la quantité d'eau à distribuer qui a été sélectionnée a été amenée dans la conduite d'alimentation (4),
- retour du dispositif de retenue supplémentaire (18) à la position ouverte de sorte que l'eau retombe à la pression ambiante dans le tronçon de la conduite d'alimentation situé entre la pompe (10) et le dispositif de retenue (14), et
- répétition des étapes précitées du procédé lors d'un nouveau soutirage.
